# EUROPEAN PATENT SPECIFICATION

(11) **EP 2 916 574 B1**
(45) Date of publication and mention of the grant of the patent: **12.02.2020**
(21) Application number: 12887889.9
(22) Date of filing: 09.11.2012
(51) Int. Cl.: H04W 16/14, H04L 5/00

(54) **METHOD AND BASE STATION FOR SHARING FREQUENCY SPECTRUM**
VERFAHREN UND BASISSTATION ZUR GEMEINSAMEN NUTZUNG EINES FREQUENZSPEKTRUMS
PROCÉDÉ ET STATION DE BASE POUR LE PARTAGE D'UN SPECTRE DE FRÉQUENCES

(43) Date of publication of application: 09.09.2015
(73) Proprietor: Huawei Technologies Co., Ltd., Longgang District Shenzhen, Guangdong 518129 (CN)
(72) Inventor: LIU, Chongli, Shenzhen Guangdong 518129 (CN); LI, Xia, Shenzhen Guangdong 518129 (CN); REN, Ruixiang, Shenzhen Guangdong 518129 (CN); ZOU, Zhiqiang, Shenzhen Guangdong 518129 (CN); WANG, Dingwei, Shenzhen Guangdong 518129 (CN)
(74) Representative: Thun, Clemens
(86) International application number: PCT/CN2012/084403
(87) International publication number: WO 2014/071619

(56) References cited:
- EP-A1- 2 312 899
- WO-A1-2008/088253
- WO-A1-2008/088254
- WO-A1-2012/053952
- WO-A1-2012/072119
- CN-A- 101 578 898
- CN-A- 101 584 233
- CN-A- 101 657 999
- CN-A- 102 223 640
- CN-A- 102 547 721

## Description

### TECHNICAL FIELD

Embodiments of the present invention relate to the field of communications technologies, and in particular, to a method and a base station for spectrum sharing.

### BACKGROUND

With the development of Long Term Evolution (Long Term Evolution, "LTE" for short) technologies, more and more operators choose to deploy LTE networks to provide better mobile broadband data services. However, due to a shortage of spectrum resources, it is difficult for an operator to obtain a new spectrum to deploy an LTE network, or, even though the operator obtains a spectrum used for deploying the LTE network, the obtained spectrum is limited. Therefore, the operator may deploy the LTE network by using a spectrum sharing technology and a spectrum that has been used in a Global System for Mobile Communications (Global System of Mobile communication, "GSM" for short) network.

An existing technology is to allocate, according to a fixed ratio, a GSM spectrum into a frequency band for a GSM network and a frequency band for an LTE network. For example, a total frequency band of 20 MHz is allocated into 10 MHz for the LTE network and 10 MHz for the GSM network. In this case, due to a shrinkage of the GSM traffic volume, a frequency band of 10 MHz may not be required at most of the time. However, if 15 MHz is allocated to the LTE network and 5 MHz is allocated to the GSM network, system congestion may occur in the GSM network due to an insufficient channel capacity in traffic peak time, so that a user cannot access the network.

In another existing technology, frequency bands of an LTE network and a GSM network can be dynamically changed, but dynamically changing a frequency band is used only in an LTE hot spot. For a non-LTE hot spot, frequency bands are still allocated to an LTE network and a GSM network in a static manner. Moreover, to reduce interference to the GSM from the LTE, a certain protection area needs to be reserved between an LTE hot spot and a non-LTE hot spot. In the protection area, a part of a spectrum that can be dynamically changed in the LTE hot spot cannot be applied to any system, which causes a waste of the part of the spectrum. Meanwhile, when a frequency band is changed, a base station or a cell needs to be reset, which causes a service interruption to a user equipment connected to an LTE cell of the changed frequency band, and affects user experience. In addition, a granularity of spectrum sharing between the GSM and the LTE can only be changed by using a system frequency band of the LTE as a granularity, and therefore, a frequency band of the LTE can only have several fixed values, and a large granularity is not conducive to smooth spectrum sharing and utilization.

WO 2012/072119 discloses resource allocation in dynamic spectrum refarming.

WO 2012/053952 discloses a method in a radio base station for allocating a radio resource to be used for communication in a radio communications network.

EP 2 312 899 discloses a frequency band allocation method which reduces PAPR (peak to average power ratio) when performing a single carrier transmission in the uplink line of an LTE+ (LTE Advanced) system in a system using both of an LTE (Long Term Evolution) system and the LTE+ system.

WO 2008/088254 discloses dynamic frequency band allocation between radio communication networks.

WO 2008/088253 discloses a method and radio base station for effective spectrum utilization.

### SUMMARY

The present invention provides a method and a base station for spectrum sharing. A first network and a second network share a second frequency band, which improves spectrum utilization efficiency, and reduces a spectrum waste.

This problem is solved by the subject matter of the independent claims. Further implementation forms are provided in the dependent claims.

In embodiments of the present invention, a first network and a second network share a second frequency band, therefore improving frequency band utilization efficiency and reducing a frequency band waste. In addition, because in a case in which the first network performs communication by using the second frequency band and a third frequency band, the second frequency band and the third frequency band form a carrier of the first network, and meanwhile, in a case in which the second frequency band and the third frequency band remain unchanged, the first network can still share the second frequency band with the second network during system operating, a service interruption caused, during system operating, by changing a frequency band used by the first network can be prevented.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a spectrum sharing method according to an example not forming part of the invention;
FIG. 2a is a schematic diagram of spectrum division of a spectrum sharing method according to an example not forming part of the invention;
FIG. 2b is a schematic diagram of spectrum division of a spectrum sharing method according to an example not forming part of the invention;
FIG. 2c is a schematic diagram of spectrum division of a spectrum sharing method according to an example not forming part of the invention;
FIG. 2d is a schematic diagram of spectrum division of a spectrum sharing method according to the present invention;
FIG. 2e is a schematic diagram of spectrum division of a spectrum sharing method according to an example not forming part of the invention;
FIG. 3a, FIG. 3b, and FIG. 3c are a schematic flowchart of a spectrum sharing method according to an example not forming part of the invention;
FIG. 4 is a schematic flowchart of a spectrum sharing method according to an example not forming part of the invention;
FIG. 5a and FIG. 5b are a schematic flowchart of a spectrum sharing method according to an example not forming part of the invention;
FIG. 6 is a schematic block diagram of a base station according to an embodiment of the present invention; and
FIG. 7 is a schematic block diagram of a base station according to an example not forming part of the invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

It should be understood that, a first network in the technical solutions in the embodiments of the present invention may be a Long Term Evolution (Long Term Evolution, "LTE" for short) system, and may also be a Long Term Evolution Advanced (long term evolution advanced, "LTE-A" for short) system; a second network in the technical solutions in the embodiments of the present invention may be a Global System for Mobile Communications (Global System of Mobile communication, "GSM" for short).

A user equipment may also be referred to as a mobile terminal (Mobile Terminal, MT), a mobile user equipment, and the like, which may communicate with one or more core networks by using a radio access network (for example, Radio Access Network, RAN). The user equipment may be a mobile terminal, such as a mobile phone (or referred to as a "cellular" phone), or a computer with a mobile terminal, for example, may be a portable, pocket-sized, handheld, computer built-in, or vehicle-mounted mobile apparatus.

A base station of the first network may be an eNB or an e-NodeB in the LTE. A base station base station of the second network may be a base station (Base Transceiver Station, BTS) in the GSM.

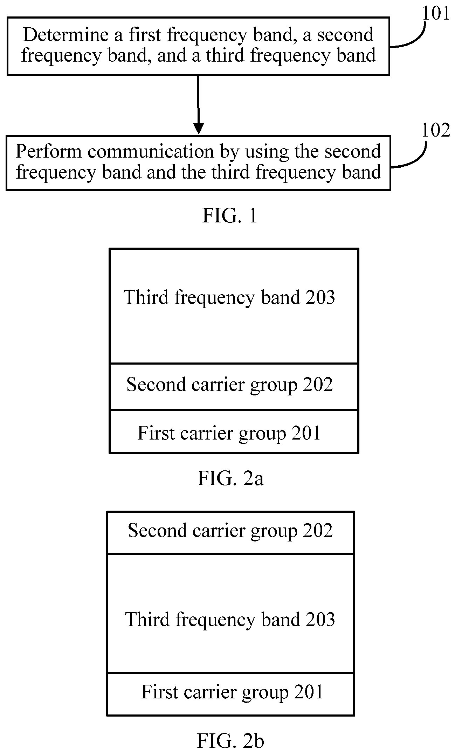

FIG. 1 is a schematic flowchart of a spectrum sharing method according to an example not forming part of the invention. The method in FIG. 1 is implemented by a base station of a first network.

101: Determine a first frequency band, a second frequency band, and a third frequency band, where the first frequency band and the second frequency band are used for communication of a second network.

102: Perform communication by using the second frequency band and the third frequency band, where the second frequency band and the third frequency band form a carrier of the first network.

According to the method in FIG. 1, the first network and the second network can share the second frequency band for communication, therefore improving spectrum utilization efficiency and reducing a spectrum waste.

FIG. 2a to FIG. 2e are schematic diagrams of spectrum division of a spectrum sharing method according to an example not forming part of the invention. After a first frequency band, a second frequency band, and a third frequency band are determined, the second frequency band and the third frequency band can be allocated by using any one of spectrum division methods in FIG. 2a to FIG. 2e, so as to perform communication by using the second frequency band and the third frequency band.

FIG. 2a is a schematic diagram of spectrum division of a spectrum sharing method according to an example not forming part of the invention.

The second frequency band is allocated into a first carrier group 201 and a second carrier group 202, where the first carrier group 201 is adjacent to the second carrier group 202, the second carrier group 202 is adjacent to a third frequency band 203, the first carrier group 201 includes at least one carrier of the second network, and the second carrier group 202 includes at least one carrier of the second network.

Because the first carrier group is preferentially used in a case in which the second network uses the second frequency band, and the second carrier group is used only in a case in which load of the first carrier group exceeds a preset value, a use probability of the second carrier group is lower than a use probability of the first carrier group. Because the third frequency band is close to the second carrier group, interference of the second network to the first network can be reduced.

FIG. 2b is a schematic diagram of spectrum division of a spectrum sharing method according to an example not forming part of the invention.

The second frequency band is allocated into a first carrier group 201 and a second carrier group 202, where the first carrier group 201 is adjacent to the third frequency band 203, the second carrier group 202 is adjacent to the third frequency band 203, the first carrier group 201 includes at least one carrier of the second network, and the second carrier group 202 includes at least one carrier of the second network.

When the spectrum division in FIG. 2b is used, the third frequency band is consecutive, and the third frequency band is easier to be allocated during downlink communication. Optionally, in a case in which the spectrum division in FIG. 2b is used, as an example, a frequency band of a physical uplink control channel (Physical Uplink Control Channel, PUCCH) may be further determined, where the frequency band of the PUCCH is greater than a frequency band of the first carrier group and greater than a frequency band of the second carrier group, so that a part of the frequency band of the PUCCH belongs to the third frequency band, reducing interference of the second network to the PUCCH of the first network.

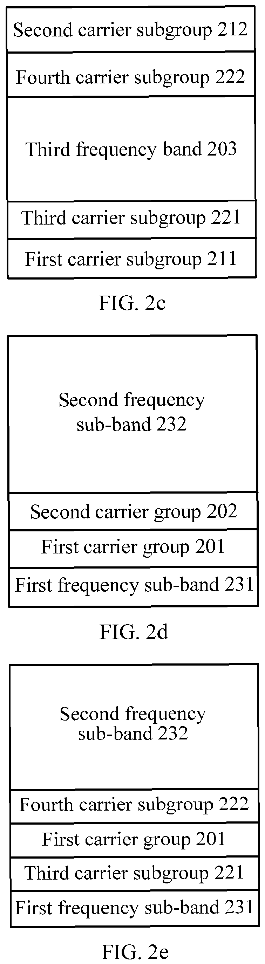

FIG. 2c is a schematic diagram of spectrum division of a spectrum sharing method according to an example not forming part of the invention.

The second frequency band is allocated into a first carrier group and a second carrier group; the first carrier group is allocated into a first carrier subgroup 211 and a second carrier subgroup 212; and the second carrier group is allocated into a third carrier subgroup 221 and a fourth carrier subgroup 222, where the second carrier subgroup 212 is adjacent to the fourth carrier subgroup 222, the fourth carrier subgroup 222 is adjacent to the third frequency band 203, the first carrier subgroup 211 is adjacent to the third carrier subgroup 221, the third carrier subgroup 221 is adjacent to the third frequency band 203, the first carrier subgroup 211 includes at least one carrier of the second network, the second carrier subgroup 212 includes at least one carrier of the second network, the third carrier subgroup 221 includes at least one carrier of the second network, and the fourth carrier subgroup 222 includes at least one carrier of the second network.

When the spectrum division in FIG. 2c is used, the third frequency band is consecutive, and the third frequency band is easier to be allocated during downlink communication. In addition, because the first carrier group is preferentially used in a case in which a base station of the second network needs to use the second frequency band, and the second carrier group is used only in a case in which resources of the first carrier group are insufficient, a use probability of the second carrier group is lower than a use probability of the first carrier group. When the spectrum division in FIG. 2c is used, because the third frequency band is adjacent to the second carrier group, adjacent channel leakage interference is less.

Optionally, in a case in which the spectrum division in FIG. 2c is used, as an example, a frequency band of a PUCCH may be further determined, where the frequency band of the PUCCH is greater than a sum of the first carrier subgroup and the third carrier subgroup and greater than a sum of the second carrier subgroup and the fourth carrier subgroup, so that a part of the frequency band of the PUCCH belongs to the third frequency band, reducing interference of the second network to the PUCCH of the first network.

FIG. 2d is a schematic diagram of spectrum division of a spectrum sharing method according to the present invention.

The second frequency band is allocated into a first carrier group 201 and a second carrier group 202, where the first carrier group includes at least one carrier of the second network, and the second carrier group includes at least one carrier of the second network.

The third frequency band 203 is allocated into a first frequency sub-band 231 and a second frequency sub-band 232, where the first frequency sub-band 231 is adjacent to the first carrier group 201, the second carrier group 202 is adjacent to the first carrier group 201, and the second frequency sub-band 232 is adjacent to the second carrier group 202.

In a case in which the spectrum division in FIG. 2d is used, interference of the second network to a PUCCH of the first network can be reduced, and because a frequency band that can be consecutively allocated to a single user equipment is extended, the single user equipment can obtain a higher uplink peak throughput.

In addition, when the spectrum division in FIG. 2d is used, the first frequency sub-band is reserved for the PUCCH, so that the PUCCH can be placed on two sides of the third frequency band. When a configured frequency band of the PUCCH is less than frequency bands of the first frequency sub-band and the second frequency sub-band, the first network does not receive serious interference from the second network. In this way, a physical uplink shared channel (Physical Uplink Shared Channel, PUSCH) of the first network can have more consecutive spectrum resources to be allocated to a single user equipment, thereby improving an uplink peak throughput. An uplink peak rate that can be obtained by a user equipment is equivalent to a rate of a sum of frequency bands of the second frequency band and the third frequency band. Meanwhile, because the first carrier group is preferentially used in a case in which a base station of the second network needs to use the second frequency band, and the second carrier group is used only in a case in which resources of the first carrier group are insufficient, a use probability of the second carrier group is lower than a use probability of the first carrier group. Therefore, a larger isolation frequency band exists between the second frequency sub-band and the first carrier group with relatively high load, a risk of adjacent channel leakage interference is smaller, resource scheduling performed by the first network on the second frequency band is easier, and all resources of the second frequency bands can be more conveniently allocated to a single user equipment, thereby avoiding excessively high dependence of allocation of the second frequency band on a user equipment.

FIG. 2e is a schematic diagram of spectrum division of a spectrum sharing method according to an example not forming part of the invention.

The second frequency band is allocated into a first carrier group 201 and a second carrier group, where the first carrier group 201 includes at least one carrier of the second network.

The second carrier group is allocated into a third carrier subgroup 221 and a fourth carrier subgroup 222, where the third carrier subgroup 221 includes at least one carrier of the second network, and the fourth carrier subgroup 222 includes at least one carrier of the second network.

The third frequency band is allocated into a first frequency sub-band 231 and a second frequency sub-band 232, where the first frequency sub-band 231 is adjacent to the third carrier subgroup 221, the first carrier group 201 is adjacent to the third carrier subgroup 221, the fourth carrier subgroup 222 is adjacent to the first carrier group 201, and the second frequency sub-band 232 is adjacent to the fourth carrier subgroup 222. In a case in which the spectrum division in FIG. 2e is used, interference of the second network to a PUCCH of the first network can be reduced.

In addition, when the spectrum division in FIG. 2e is used, the first frequency sub-band is reserved for the PUCCH, so that the PUCCH can be placed on two sides of the third frequency band. When a configured frequency band of the PUCCH is less than frequency bands of the first frequency sub-band and the second frequency sub-band, the first network does not receive serious interference from the second network. In this way, an uplink PUSCH of the first network may have more consecutive spectrum resources to be allocated to a single user equipment, thereby improving an uplink peak throughput. An uplink peak rate that can be obtained by a user equipment is equivalent to a rate of a sum of frequency bands of the second frequency band and the third frequency band. Meanwhile, a larger isolation frequency band exists between the second frequency sub-band and the first carrier group with relatively high load, a risk of adjacent channel leakage interference is smaller, resource scheduling performed by the first network on the second frequency band is easier, and all resources of the second frequency bands can be more conveniently allocated to a single user equipment, thereby avoiding excessively high dependence of allocation of the second frequency band on a user equipment.

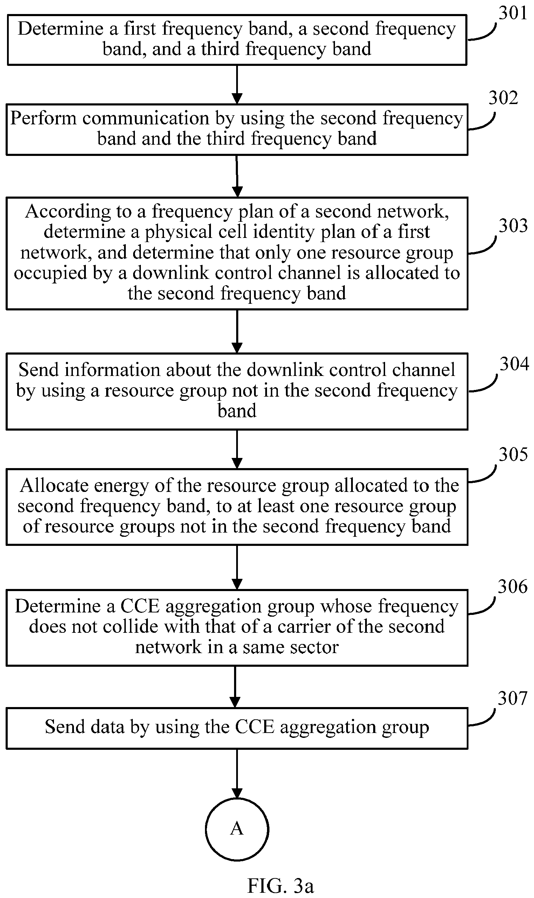

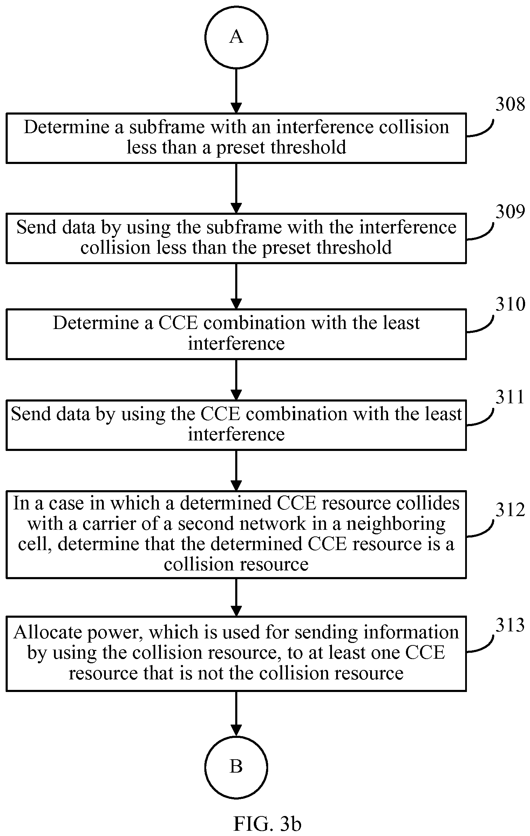

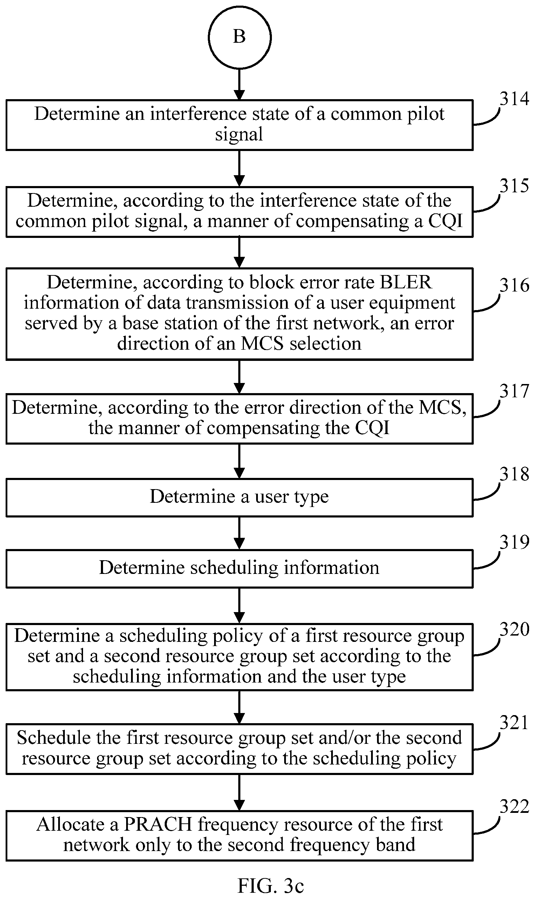

In addition, because the first carrier group is preferentially used in a case in which a base station of the second network needs to use the second frequency band, and the second carrier group is used only in a case in which resources of the first carrier group are insufficient, a use probability of the second carrier group is lower than a use probability of the first carrier group. When the spectrum division in FIG. 2e is used, because both the first frequency sub-band and the second frequency sub-band are adjacent to the second carrier group, the adjacent channel leakage interference is less. FIG. 3a, FIG. 3b, and FIG. 3c are a schematic flowchart of a spectrum sharing method according to an example not forming part of the invention. FIG. 3a, FIG. 3b, and FIG. 3c are a specific example of FIG. 1.

301: Determine a first frequency band, a second frequency band, and a third frequency band, where the first frequency band and the second frequency band are used for communication of a second network.

302: Perform communication by using the second frequency band and the third frequency band, where the second frequency band and the third frequency band form a carrier of a first network.

Optionally, ranges of the first frequency band, the second frequency band, and the third frequency band may be determined randomly instead of being changed by using a system frequency band of the first network as a granularity, and after the frequency band ranges are determined, the frequency band ranges will not be changed any more during system operating. For example, the first frequency band may select 10 MHz, the second frequency band may select 3 MHz, the third frequency band may select 7 MHz, a carrier frequency of the first frequency band may be 900 MHz, and frequencies of the second frequency band and the third frequency band may be 1800 MHz; and in this case, a frequency band of the first network is 10 MHz, and a frequency band of the second network is 10 MHz. It should be noted that, the frequency band selection described above is merely an example, the present example may also use another selection manner (for example, the first frequency band may select 5 MHz, the second frequency band may select 5 MHz, and the third frequency band may select 15 MHz), and specific frequency band division is not limited in the present example.

Optionally, as an example, a ratio of the third frequency band to the second frequency band is greater than 1:1, so as to reduce interference of the second network to a physical HARQ indicator channel (Physical Hybrid ARQ Indicator Channel, PHICH), a physical control format indicator channel (Physical Control Format Indicator Channel, PCFICH), and a physical downlink control channel (Physical Downlink Control Channel, PDCCH) of the first network.

Optionally, as an example, step 303 may be further included, so as to reduce interference of the second network to a downlink control channel of the first network.

303: According to a frequency plan of the second network, determine a physical cell identity plan of the first network, and determine that only one resource group occupied by the downlink control channel is allocated to the second frequency band, so as to reduce the interference of the second network to the downlink control channel of the first network.

For the PHICH, because a physical resource location of the PHICH is related to a physical cell identifier of the first network, after the physical cell identifier is determined, a specific physical resource location of a first group of the PHICH can be determined. In a case in which a carrier frequency of the second network overlaps the physical resource location of the PHICH of the first network in a same sector, the PHICH of the first network receives interference. In a case in which a frequency of the second network is planned, a physical cell identity of the first network that collides with the frequency of the second network can be determined. Therefore, when a physical cell identity of the first network is planned, the physical cell identity that collides with the frequency of the second network is avoided, and it is determined that only one resource group occupied by the PHICH is allocated to the second frequency band, which can reduce the interference of the second network to the PHICH of the first network.

For the PCFICH, because a physical resource location of the PCFICH is related to a physical cell identifier of the first network, after the physical cell identifier is determined, the specific physical resource location of the PCFICH can be determined. In a case in which a carrier frequency of the second network overlaps the physical resource location of the PCFICH of the first network in a same sector, the PCFICH of the first network receives interference. In a case in which a frequency of the second network is planned, a physical cell identity of the first network that collides with the frequency of the second network can be determined. Therefore, when a physical cell identity of the first network is planned, the physical cell identity that collides with the frequency of the second network is avoided, and it is determined that only one resource group occupied by the PCFICH is allocated to the second frequency band, which can reduce the interference of the second network to the PCFICH of the first network. Optionally, as an example, in a case in which step 303 is included, step 304 and step 305 may be further included, so as to reduce the interference of the second network to the downlink control channel of the first network.

304: Send information about the downlink control channel by using a resource group not in the second frequency band.

305: Allocate energy of a resource group allocated to the second frequency band, to at least one resource group of resource groups not in the second frequency band, so as to increase transmit power of the resource group, and further reduce the interference of the second network to the downlink control channel of the first network.

For example, for the PCFICH, one resource group may be allocated to the second frequency band, and other three resource groups are allocated to the third frequency band. Meanwhile, the resource group in the second frequency band may not be used to send any information, and information is sent only by using another resource group. Meanwhile, the energy of the resource group in the second frequency band may be further allocated to at least one resource group of the three resource groups, to increase transmit power of the resource group, which can improve sending performance, and further reduce the interference of the second network to the PCFICH of the first network. For the PHICH, one resource group may be allocated to the second frequency band, and other two resource groups are allocated to the third frequency band. Meanwhile, the resource group in the second frequency band may not be used to send any information, and information is sent only by using another resource group. Meanwhile, the energy of the resource group in the second frequency band may be further allocated to at least one resource group of the two resource groups, to increase transmit power of the resource group, which can improve sending performance, and further reduce the interference of the second network to the PHICH of the first network.

Optionally, as an example, step 306 and step 307 may be further included, so as to reduce the interference of the second network to the PDCCH of the first network.

306: Determine a CCE aggregation group whose frequency does not collide with that of a carrier of the second network in a same sector.

307: Send data by using the CCE aggregation group.

Optionally, as an example, step 308 and step 309 may be further included, so as to reduce the interference of the second network to the PDCCH of the first network.

308: Determine a subframe with an interference collision less than a preset threshold.

309: Send data by using the subframe with the interference collision less than the preset threshold.

Optionally, as an example, step 310 and step 311 may be further included, so as to reduce the interference of the second network to the PDCCH of the first network.

310: Determine a CCE combination with the least interference.

311: Send data by using the CCE combination with the least interference.

Optionally, as an example, step 312 and step 313 may be further included, so as to reduce the interference of the second network to the PDCCH of the first network.

312: In a case in which a determined control channel element (Control Channel Element, CCE) resource collides with a carrier of the second network in a neighboring cell, determine that the determined CCE resource is a collision resource.

313: Allocate power, which is used to send information by using the collision resource, to at least one CCE resource that is not the collision resource. Because power of the CCE resource that is allocated power of the collision resource is increased, the interference of the second network to the PDCCH can be reduced.

Optionally, as an example, step 314 and step 315 may be further included, so as to reduce interference of the second network to a common pilot signal of the first network.

314: Determine an interference state of a common pilot signal.

315: Determine, according to the interference state of the common pilot signal, a manner of compensating a CQI.

Optionally, as an example, step 316 and step 317 may be further included, so as to reduce the interference of the second network to the common pilot signal of the first network.

316: Determine, according to block error rate (Block Error Rate, BLER) information of data transmission of a user equipment served by a base station of the first network, an error direction of a modulation and coding scheme (Modulation and Coding Scheme, MCS) selection.

317: Determine, according to the error direction of the MCS, the manner of compensating the channel quality indicator (Channel Quality Indication, CQI).

Optionally, as an example, step 314 to step 317 may be performed simultaneously, which can obtain a more precise manner of compensating the CQI, so as to reduce the interference of the second network to the common pilot signal of the first network.

Optionally, as an example, step 318 to step 321 may be further included, so as to reduce interference of the second network to a physical downlink shared channel (Physical Downlink Shared Channel, PDSCH) of the first network.

318: Determine a user type, where the user type is a central user equipment and an edge user equipment of the base station of the first network.

319: Determine scheduling information, where the scheduling information includes a success rate of transmission using the second frequency band and/or an MCS order.

320: Determine a scheduling policy of a first resource group set and a second resource group set according to the scheduling information and the user type, where the first resource group set is all resource groups that belong to the second frequency band, and the second resource group set is all resource groups that belong to the third frequency band.

321: Schedule the first resource group set and/or the second resource group set according to the scheduling policy.

The scheduling policy that can be determined may include:
scheduling policy 1: the first resource group set and the second resource group set are scheduled separately, and the first resource group set is scheduled only to the central user equipment;
scheduling policy 2: the first resource group set and the second resource group set are scheduled jointly, and the edge user equipment can use only the second resource group set;
scheduling policy 3: the first resource group set and the second resource group set are scheduled jointly, and the edge user equipment can independently schedule the first resource group set or the second resource group set;
scheduling policy 4: the first resource group set and the second resource group set can be randomly scheduled to the central user equipment or the edge user equipment; and
scheduling policy 5: only the second resource group set is scheduled.

Optionally, scheduling policy 1 to scheduling policy 5 may be used, or several scheduling policies may be selected randomly, and the first resource group set and the second resource group set are scheduled to the central user equipment or the edge user equipment according to a selected scheduling policy.

Optionally, scheduling policy 1 may be a default scheduling policy. For example, for the central user equipment, in a case in which an attempt to perform scheduling by using scheduling policy 1 fails, scheduling policy 5 is used according to scheduling information (for example, an interference measurement condition). After a period of time, scheduling policy 1 is used again for scheduling. In another example, if the central user equipment can perform data transmission on the second frequency band for certain time by using a higher-order MCS, and an initial block error rate (Initial BLER, IBLER) can be locked, it may be determined that interference of the second network on the central user equipment is small, and scheduling may be performed by using scheduling policy 2. In another example, in a case in which scheduling policy 2 is used, if the central user equipment can still perform data transmission on the second frequency band for a period of time by using the higher-order MCS, and the IBLER can be locked, scheduling may be performed by using scheduling policy 3. If a cell central user equipment can use a high MCS order, a cell edge user equipment uses a lower MCS order, but the IBLER can be locked and converged to a target value, and is basically the same as an MCS order for scheduling the second frequency band at a cell edge, scheduling may be performed by using scheduling policy 4. In a case in which scheduling is performed by using scheduling policy 4, a condition of interference received by the second frequency band may be monitored according to scheduling information (for example, interference), and that scheduling is performed by using another scheduling policy is determined according to the condition of the interference received by the second frequency band.

Optionally, as an example, step 322 may be further included, so as to reduce interference of the second network to a PRACH of the first network.

322: Allocate a PRACH frequency resource of the first network only to the second frequency band.

Optionally, as an example, interference of the second network to the first network may be determined in one or a combination of the following manners:
determining the interference of the second network to the first network according to a CQI feedback;
detecting noise of an uplink second frequency band, and determining the interference of the second network to the first network;
collecting statistics on a success rate of data transmission by a user equipment on the second frequency band, and determining the interference of the second network to the first network according to the success rate; and determining the number of selections of the modulation and coding scheme by a user equipment on the second frequency band, and determining the interference of the second network to the first network according to the number of selections.

Optionally, as an example, whether the second network occupies the second frequency band may be further determined in one or a combination of the following manners:
obtaining received signal strength information of an uplink physical frequency sub-band, and determining, according to the received signal strength information, whether the second network uses the second frequency band corresponding to the physical frequency sub-band;
determining, according to an MCS of a user equipment of the first network using the second frequency band, with reference to an IBLER scheme of a hybrid automatic repeat request (Hybrid Automatic Repeat reQuest, HARQ), whether the second network uses the second frequency band; and
receiving CQI information fed back by a served user equipment, and determining, according to the CQI information, whether the second network uses the second frequency band.

It should be noted that, there is no sequence limit to the foregoing optional steps, the examples formed by multiple steps. For example, step 322 may be performed first, and then step 303 is performed. Alternatively, the interference of the second network to the first network is determined first, and then any one or more steps of step 303 to step 322 are performed. The present invention sets no limitation.

According to the method in FIG. 3, the first network and the second network can share the second frequency band for communication, therefore improving spectrum utilization efficiency, and reducing a spectrum waste. Moreover, after different examples are selected, the interference of the second network to the PHICH, the PCFICH, the PDCCH, the common pilot signal, the PDSCH, and/or the PRACH of the first network can be reduced, the interference of the second network to the first network can be further determined, and/or whether the second network uses the second frequency band can be further determined.

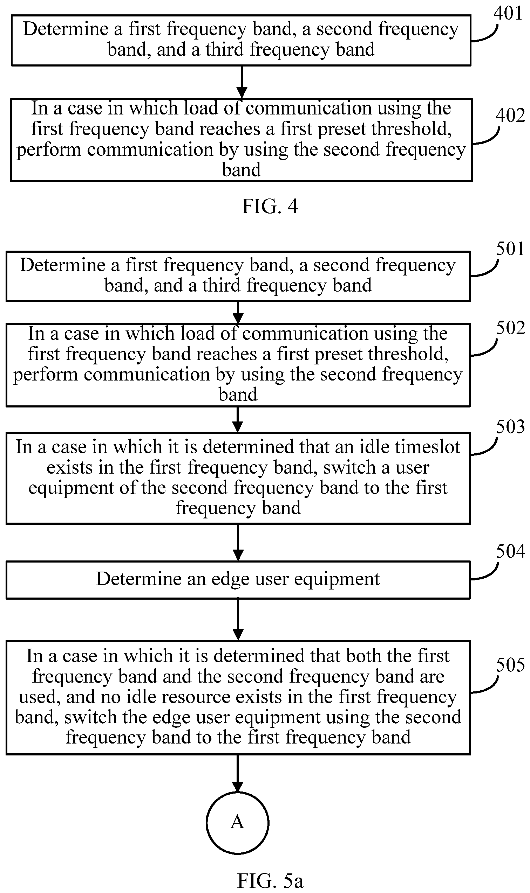

FIG. 4 is a schematic flowchart of a spectrum sharing method according to an example not forming part of the invention. The method in FIG. 4 is performed by a base station of a second network.

401: Determine a first frequency band, a second frequency band, and a third frequency band, where the second frequency band and the third frequency band form a carrier of a first network, and the second frequency band and the third frequency band are used for communication of the first network.

402: In a case in which load of communication using the first frequency band reaches a first preset threshold, perform communication by using the second frequency band. According to the method in FIG. 4, the first network and the second network can share the second frequency band for communication, therefore improving spectrum utilization efficiency, and reducing a spectrum waste. Moreover, in a case in which the second network uses the second frequency band, the first network can still perform communication by using the carrier formed by the second frequency band and the third frequency band.

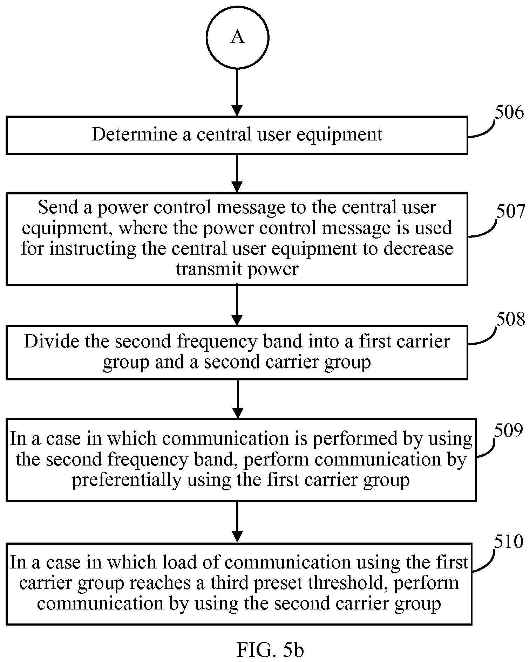

FIG. 5a and FIG. 5b are a schematic flowchart of a spectrum sharing method according to an example not forming part of the present invention. The method in FIG. 5a and FIG. 5b is a specific example of FIG. 4.

501: Determine a first frequency band, a second frequency band, and a third frequency band, where the second frequency band and the third frequency band form a carrier of a first network, and the second frequency band and the third frequency band are used for communication of the first network.

502: In a case in which load of communication using the first frequency band reaches a first preset threshold, perform communication by using the second frequency band.

Optionally, as an example, a base station of the second network may use the first frequency band to bear a broadcast control channel BCCH and a traffic channel TCH, and use the second frequency band to bear a TCH, so as to reduce interference to the first network.

Optionally, as an example, in a case in which a use rate of the TCH of the first frequency band reaches a second preset threshold, the base station of the second network uses the TCH of the second frequency band, so as to reduce the interference to the first network.

Optionally, as an example, in a case in which multiple carriers exist in the second network, the base station of the second network uses a TCH of a carrier in the second frequency band; and in a case in which the used TCH of the carrier is exhausted, uses a TCH of another carrier in the second frequency band, so as to reduce the interference to the first network.

Optionally, as an example, step 503 may be further included, so as to reduce the interference to the first network.

503: In a case in which it is determined that an idle timeslot exists in the first frequency band, switch a user equipment of the second frequency band to the first frequency band.

Optionally, as an example, step 504 and step 505 may be further included, so as to reduce the interference to the first network.

504: Determine an edge user equipment.

505: In a case in which it is determined that both the first frequency band and the second frequency band are used, and no idle resource exists in the first frequency band, switch the edge user equipment using the second frequency band to the first frequency band.

Optionally, as an example, step 506 and step 507 may be further included, so as to reduce the interference to the first network.

506: Determine a central user equipment.

507: Send a power control message to the central user equipment, where the power control message is used for instructing the central user equipment to decrease transmit power.

Optionally, as an example, step 508 to step 510 may be further included.

508: Allocate the second frequency band into a first carrier group and a second carrier group, where the first carrier group includes at least one carrier of the second network, and the second carrier group includes at least one carrier of the second network.

509: In a case in which communication is performed by using the second frequency band, perform communication by preferentially using the first carrier group.

510: In a case in which load of communication using the first carrier group reaches a third preset threshold, perform communication by using the second carrier group. According to the method in FIG. 5, the first network and the second network can share the second frequency band for communication, therefore improving spectrum utilization efficiency, and reducing a spectrum waste. In addition, after different examples are selected, the base station of the second network can reduce interference to a base station of the first network.

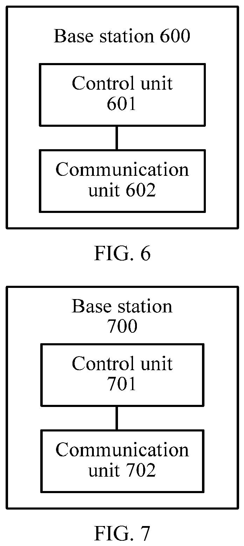

FIG. 6 is a schematic block diagram of a base station according to an embodiment of the present invention. The base station 600 shown in FIG. 6 can perform the steps performed by the foregoing base station of the first network. The base station 600 includes a control unit 601 and a communication unit 602.

The control unit 601 is configured to determine a first frequency band, a second frequency band, and a third frequency band, where the first frequency band and the second frequency band are used for communication of a second network.

The communication unit 602 is further configured to perform communication by using the second frequency band and the third frequency band, where the second frequency band and the third frequency band form a carrier of a first network.

According to the base station in FIG. 6, the first network and the second network can share the second frequency band for communication, therefore improving spectrum utilization efficiency, and reducing a spectrum waste.

Optionally, as an embodiment, the control unit 601 is specifically configured to determine that a ratio of the third frequency band to the second frequency band is greater than 1:1, so as to reduce interference of the second network to a PHICH, a PCFICH, and a PDCCH of the first network.

Optionally, as an embodiment, the control unit 601 may be further configured to allocate the second frequency band into a first carrier group and a second carrier group, where the first carrier group is adjacent to the third frequency band, the second carrier group is adjacent to the third frequency band, the first carrier group includes at least one carrier of the second network, and the second carrier group includes at least one carrier of the second network. In this case, because the first carrier group is preferentially used in a case in which the second network uses the second frequency band,, and the second carrier group is used only in a case in which load of the first carrier group exceeds a preset value, a use probability of the second carrier group is lower than a use probability of the first carrier group. Because the third frequency band is close to the second carrier group, interference of the second network to the first network can be reduced.

Optionally, as an embodiment, the control unit 601 may be further configured to allocate the second frequency band into a first carrier group and a second carrier group, allocate the first carrier group into a first carrier subgroup and a second carrier subgroup, and allocate the second carrier group into a third carrier subgroup and a fourth carrier subgroup, where the second carrier subgroup is adjacent to the fourth carrier subgroup, the fourth carrier subgroup is adjacent to the third frequency band, the first carrier subgroup is adjacent to the third carrier subgroup, the third carrier subgroup is adjacent to the third frequency band, the first carrier subgroup includes at least one carrier of the second network, the second carrier subgroup includes at least one carrier of the second network, the third carrier subgroup includes at least one carrier of the second network, and the fourth carrier subgroup includes at least one carrier of the second network. In this case, the third frequency band is consecutive, and the third frequency band is easier to be allocated during downlink communication. Optionally, the control unit 601 may be further configured to determine a frequency band of a PUCCH, where the frequency band of the PUCCH is greater than a frequency band of the first carrier group and greater than a frequency band of the second carrier group, so that a part of the frequency band of the PUCCH belongs to the third frequency band, so as to reduce interference of the second network to the PUCCH of the first network.

Optionally, as an embodiment, the control unit 601 may be further configured to allocate the second frequency band into a first carrier group and a second carrier group, where the first carrier group includes at least one carrier of the second network, and the second carrier group includes at least one carrier of the second network; and
the control unit 601 may be further configured to allocate the third frequency band into a first frequency sub-band and a second frequency sub-band, where the first frequency sub-band is adjacent to the first carrier group, the second carrier group is adjacent to the first carrier group, and the second frequency sub-band is adjacent to the second carrier group. In this case, the third frequency band is consecutive, and the third frequency band is easier to be allocated during downlink communication. The first carrier group is preferentially used in a case in which a base station of the second network needs to use the second frequency band, the second carrier group is used only in a case in which resources of the first carrier group are insufficient, and therefore a use probability of the second carrier group is less than a use probability of the first carrier group. In this case, because the third frequency band is adjacent to the second carrier group, adjacent channel leakage interference is less. Optionally, the control unit 601 may be further configured to determine a frequency band of a PUCCH, where the frequency band of the PUCCH is greater than a sum of the first carrier subgroup and the third carrier subgroup and greater than a sum of the second carrier subgroup and the fourth carrier subgroup, so that a part of the frequency band of the PUCCH belongs to the third frequency band, so as to reduce the interference of the second network to the PUCCH of the first network.

Optionally, as an embodiment, the control unit 601 may be further configured to allocate the second frequency band into a first carrier group and a second carrier group, where the first carrier group includes at least one carrier of the second network;
the control unit 601 may be further configured to allocate the second carrier group into a third carrier subgroup and a fourth carrier subgroup, where the third carrier subgroup includes at least one carrier of the second network, and the fourth carrier subgroup includes at least one carrier of the second network; and
the control unit 601 may be further configured to allocate the third frequency band into a first frequency sub-band and a second frequency sub-band, where the first frequency sub-band is adjacent to the third carrier subgroup, the first carrier group is adjacent to the third carrier subgroup, the fourth carrier subgroup is adjacent to the first carrier group, and the second frequency sub-band is adjacent to the fourth carrier subgroup. In this case, the interference of the second network to the PUCCH of the first network can be reduced, and because a frequency band that can be consecutively allocated to a single user equipment is extended, the single user equipment can obtain a higher uplink peak throughput. Optionally, the control unit 601 may be further configured to determine a bandwidth of the PUCCH, where the bandwidth of the PUCCH is greater than a sum of the first carrier subgroup and the third carrier subgroup, and the bandwidth of the PUCCH is greater than a sum of the second carrier subgroup and the fourth carrier subgroup, so that a part of the bandwidth of the PUCCH belongs to the third frequency band. In this case, the first frequency sub-band is reserved for the PUCCH, so that the PUCCH can be placed on two sides of the third frequency band. When a configured frequency band of the PUCCH is less than frequency bands of the first frequency sub-band and the second frequency sub-band, the first network does not receive serious interference from the second network. In this way, an uplink PUSCH channel of the first network may have more consecutive spectrum resources to be allocated to a single user equipment, thereby improving an uplink peak throughput. An uplink peak rate that can be obtained by a user equipment is equivalent to a rate of a sum of frequency bands of the second frequency band and the third frequency band. Meanwhile, because the first carrier group is preferentially used in a case in which a base station of the second network needs to use the second frequency band, and the second carrier group is used only in a case in which resources of the first carrier group are insufficient, a use probability of the second carrier group is less than a use probability of the first carrier group. Therefore, a larger isolation frequency band exists between the second frequency sub-band and the first carrier group with relatively high load, a risk of adjacent channel leakage interference is smaller, resource scheduling performed by the first network on the second frequency band is easier, and all resources of the second frequency bands can be more conveniently allocated to a single user equipment, thereby avoiding excessively high dependence of allocation of the second frequency band on a user equipment.

Optionally, as an embodiment, the control unit 601 may be further configured to: according to a frequency plan of the second network, determine a physical cell identity plan of the first network, and determine that only one resource group occupied by a downlink control channel is allocated to the second frequency band, so as to reduce interference of the second network to the downlink control channel of the first network.

Optionally, as an embodiment, the communication unit 602 is further configured to send information about the downlink control channel by using a resource group not in the second frequency band; and
the control unit 601 may be further configured to allocate energy of a resource group in the second frequency band to at least one resource group of resource groups not in the second frequency band, so as to increase transmit power of the at least one resource group. In this case, the base station 600 can reduce the interference of the second network to the downlink control channel of the first network.

Optionally, as an embodiment, the control unit 601 may be further configured to determine a control channel element CCE aggregation group whose frequency does not collide with that of a carrier of the second network in a same sector; and
the communication unit 602 may be further configured to send data by using the CCE aggregation group whose frequency does not collide with that of the carrier of the second network in the same sector. In this case, the base station 600 can reduce the interference of the second network to the PDCCH of the first network.

Optionally, as an embodiment, the control unit 601 may be further configured to determine a subframe with an interference collision less than a preset threshold; and
the communication unit 602 may be further configured to send data by using the subframe with the interference collision less than the preset threshold. In this case, the base station 600 can reduce the interference of the second network to the PDCCH of the first network.

Optionally, as an embodiment, the control unit 601 may be further configured to determine a CCE combination with the least interference; and
the communication unit 602 may be further configured to send data by using the CCE combination with the least interference. In this case, the base station 600 can reduce the interference of the second network to the PDCCH of the first network.

Optionally, as an embodiment, the control unit 601 may be further configured to: in a case in which a determined CCE resource collides with a carrier of a second network in a neighboring cell, determine that the determined CCE resource is a collision resource; and
the control unit 601 may be further configured to allocate power, which is used to send information by using the collision resource, to at least one CCE resource that is not the collision resource. In this case, the base station 600 can reduce the interference of the second network to the PDCCH of the first network.

Optionally, as an embodiment, the control unit 601 may be further configured to determine an interference state of a common pilot signal; and
the control unit 601 may be further configured to determine, according to the interference state of the common pilot signal, a manner of compensating a channel quality indicator CQI. In this case, the base station 600 can reduce interference of the second network to the common pilot signal of the first network.

Optionally, as an embodiment, the control unit 601 may be further configured to determine, according to block error rate BLER information of data transmission of a user equipment, an error direction of a modulation and coding scheme MCS selection; and
the control unit 601 may be further configured to determine, according to the error direction of the MCS, the manner of compensating the CQI. In this case, the base station 600 can reduce the interference of the second network to the common pilot signal of the first network.

Optionally, as an embodiment, the control unit 601 may be further configured to determine a user type, where the user type is a central user equipment and an edge user equipment of a base station of the first network;
the control unit 601 may be further configured to determine scheduling information, where the scheduling information includes a success rate of transmission using the second frequency band and/or an MCS order;
the control unit 601 may be further configured to determine a scheduling policy of a first resource group set and a second resource group set according to the scheduling information and the user type, where the first resource group set is all resource groups that belong to the second frequency band, and the second resource group set is all resource groups that belong to the third frequency band; and
the control unit 601 may be further configured to schedule the first resource group set and/or the second resource group set according to the scheduling policy. In this case, the base station 600 can reduce interference of the second network to a PDSCH of the first network.

Optionally, as an embodiment, the control unit 601 may be further configured to allocate a PRACH frequency resource of the first network only to the second frequency band. In this case, the base station 600 can reduce interference of the second network to a PRACH of the first network.

Optionally, as an embodiment, the control unit 601 may be further configured to determine interference of the second network to the first network.

The control unit 601 may be specifically configured to determine the interference of the second network to the first network according to a CQI feedback.

The control unit 601 may be specifically configured to detect noise of an uplink second frequency band, and determine the interference of the second network to the first network according to the noise.

The control unit 601 may be specifically configured to collect statistics on a success rate of data transmission by a user equipment on the second frequency band, and determine the interference of the second network to the first network according to the success rate.

The control unit 601 may be specifically configured to determine the number of selections of the modulation and coding scheme by a user equipment on the second frequency band, and determine the interference of the second network to the first network according to the number of selections.

Optionally, as an embodiment, the control unit 601 may be further configured to determine whether the second network uses the second frequency band.

The control unit 601 may be specifically configured to obtain received signal strength information of an uplink physical frequency sub-band, and determine, according to the received signal strength information, whether the second network uses the second frequency band corresponding to the physical frequency sub-band.

The control unit 601 may be specifically configured to determine, according to an MCS of a user equipment of the first network using the second frequency band, with reference to an IBLER scheme of an HARQ, whether the second network uses the second frequency band.

The control unit 601 may be specifically configured to obtain CQI information fed back by a user equipment, and determine, according to the CQI information, whether the second network uses the second frequency band.

FIG. 7 is a schematic block diagram of a base station according to an example of the present invention. The base station 700 shown in FIG. 7 can perform the steps performed by the foregoing base station of the second network. The base station 700 includes a control unit 701 and a communication unit 702.

The control unit 701 is configured to determine a first frequency band, a second frequency band, and a third frequency band, where the second frequency band and the third frequency band form a carrier of a first network, and the second frequency band and the third frequency band are used for communication of the first network.

The communication unit 702 is configured to: in a case in which load of communication using the first frequency band reaches a first preset threshold, perform communication by using the second frequency band.

According to the base station in FIG. 7, the first network and the second network can share the second frequency band for communication, therefore improving spectrum utilization efficiency, and reducing a spectrum waste.

Optionally, as an example, the control unit 701 may be further configured to use the first frequency band to bear a broadcast control channel (Broadcast Control Channel, BCCH) and a traffic channel (Traffic Channel, TCH); and
the control unit 701 may be further configured to use the second frequency band to bear a TCH. In this case, the base station 700 can reduce interference to the first network.

Optionally, as an example, the control unit 701 may be further configured to: in a case in which a use rate of the TCH of the first frequency band reaches a second preset threshold, use the TCH of the second frequency band. In this case, the base station 700 can reduce the interference to the first network.

Optionally, as an example, the control unit 701 may be further configured to: in a case in which multiple carriers exist in the second network, use a TCH of a carrier in the second frequency band; and
the control unit 701 may be further configured to: in a case in which the used TCH of the carrier is exhausted, use a TCH of another carrier in the second frequency band. In this case, the base station 700 can reduce the interference to the first network.

Optionally, as an example, the control unit 701 may be further configured to: in a case in which it is determined that an idle timeslot exists in the first frequency band, switch a user equipment of the second frequency band to the first frequency band. In this case, the base station 700 can reduce the interference to the first network.

Optionally, as an example, the control unit 701 may be further configured to determine an edge user equipment; and
the control unit 701 may be further configured to: in a case in which it is determined that both the first frequency band and the second frequency band are used, and no idle resource exists in the first frequency band, switch the edge user equipment using the second frequency band to the first frequency band. In this case, the base station 700 can reduce the interference to the first network.

Optionally, as an example, the control unit 701 may be further configured to determine a central user equipment; and
the communication unit 702 may be further configured to send a power control message to the central user equipment, where the power control message is used for instructing the central user equipment to decrease transmit power. In this case, the base station 700 can reduce the interference to the first network.

Optionally, as an example, the control unit 701 may be further configured to allocate the second frequency band into a first carrier group and a second carrier group, where the first carrier group includes at least one carrier of the second network, and the second carrier group includes at least one carrier of the second network;
the control unit 701 may be further configured to: in a case in which communication is performed by using the second frequency band, perform communication by preferentially using the first carrier group; and the control unit 701 may be further configured to: in a case in which load of communication using the first carrier group reaches a third preset threshold, perform communication by using the second carrier group. In this case, the base station 700 can reduce the interference to the first network.

As an example, a base station of the first network includes a controller and a transceiver, which can perform the steps performed by the foregoing base station of the first network.

The controller is configured to determine a first frequency band, a second frequency band, and a third frequency band, where the first frequency band and the second frequency band are used for communication of the second network.

The transceiver is further configured to perform communication by using the second frequency band and the third frequency band, where the second frequency band and the third frequency band form a carrier of a first network.

According to the base station, the first network and the second network can share the second frequency band for communication, therefore improving spectrum utilization efficiency, and reducing a spectrum waste.

Optionally, as an example, the controller is specifically configured to determine that a ratio of the third frequency band to the second frequency band is greater than 1:1, so as to reduce interference of the second network to a PHICH, a PCFICH, and a PDCCH of the first network.

Optionally, as an example, the controller may be further configured to allocate the second frequency band into a first carrier group and a second carrier group, where the first carrier group is adjacent to the third frequency band, the second carrier group is adjacent to the third frequency band, the first carrier group includes at least one carrier of the second network, and the second carrier group includes at least one carrier of the second network. In this case, because the first carrier group is preferentially used in a case in which the second network uses the second frequency band, and the second carrier group is used only in a case in which load of the first carrier group exceeds a preset value, a use probability of the second carrier group is lower than a use probability of the first carrier group. Because the third frequency band is close to the second carrier group, interference of the second network to the first network can be reduced.

Optionally, as an example, the controller may be further configured to allocate the second frequency band into a first carrier group and a second carrier group, allocate the first carrier group into a first carrier subgroup and a second carrier subgroup, and allocate the second carrier group into a third carrier subgroup and a fourth carrier subgroup, where the second carrier subgroup is adjacent to the fourth carrier subgroup, the fourth carrier subgroup is adjacent to the third frequency band, the first carrier subgroup is adjacent to the third carrier subgroup, the third carrier subgroup is adjacent to the third frequency band, the first carrier subgroup includes at least one carrier of the second network, the second carrier subgroup includes at least one carrier of the second network, the third carrier subgroup includes at least one carrier of the second network, and the fourth carrier subgroup includes at least one carrier of the second network. In this case, the third frequency band is consecutive, and the third frequency band is easier to be allocated during downlink communication. Optionally, the controller may be further configured to determine a frequency band of a PUCCH, where the frequency band of the PUCCH is greater than a frequency band of the first carrier group and greater than a frequency band of the second carrier group, so that a part of the frequency band of the PUCCH belongs to the third frequency band, so as to reduce interference of the second network to the PUCCH of the first network. Optionally, as an example, the controller may be further configured to allocate the second frequency band into a first carrier group and a second carrier group, where the first carrier group includes at least one carrier of the second network, and the second carrier group includes at least one carrier of the second network; and
the controller may be further configured to allocate the third frequency band into a first frequency sub-band and a second frequency sub-band, where the first frequency sub-band is adjacent to the first carrier group, the second carrier group is adjacent to the first carrier group, and the second frequency sub-band is adjacent to the second carrier group. In this case, the third frequency band is consecutive, and the third frequency band is easier to be allocated during downlink communication. The first carrier group is preferentially used in a case in which a base station of the second network needs to use the second frequency band, the second carrier group is used only in a case in which resources of the first carrier group are insufficient, and therefore a use probability of the second carrier group is less than a use probability of the first carrier group. In this case, because the third frequency band is adjacent to the second carrier group, adjacent channel leakage interference is less. Optionally, the controller may be further configured to determine a frequency band of the PUCCH, where the frequency band of the PUCCH is greater than a sum of the first carrier subgroup and the third carrier subgroup and greater than a sum of the second carrier subgroup and the fourth carrier subgroup, so that a part of the frequency band of the PUCCH belongs to the third frequency band, so as to reduce interference of the second network to the PUCCH of the first network.

Optionally, as an example, the controller may be further configured to allocate the second frequency band into a first carrier group and a second carrier group, where the first carrier group includes at least one carrier of the second network;
the controller may be further configured to allocate the second carrier group into a third carrier subgroup and a fourth carrier subgroup, where the third carrier subgroup includes at least one carrier of the second network, and the fourth carrier subgroup includes at least one carrier of the second network; and
the controller may be further configured to allocate the third frequency band into a first frequency sub-band and a second frequency sub-band, where the first frequency sub-band is adjacent to the third carrier subgroup, the first carrier group is adjacent to the third carrier subgroup, the fourth carrier subgroup is adjacent to the first carrier group, and the second frequency sub-band is adjacent to the fourth carrier subgroup. In this case, interference of the second network to the PUCCH of the first network can be reduced, and because a frequency band that can be consecutively allocated to a single user equipment is extended, the single user equipment can obtain a higher uplink peak throughput. Optionally, the controller may be further configured to determine a bandwidth of the PUCCH, where the bandwidth of the PUCCH is greater than a sum of the first carrier subgroup and the third carrier subgroup, and the bandwidth of the PUCCH is greater than a sum of the second carrier subgroup and the fourth carrier subgroup, so that a part of the bandwidth of the PUCCH belongs to the third frequency band. In this case, the first frequency sub-band is reserved for the PUCCH, so that the PUCCH can be placed on two sides of the third frequency band. When a configured frequency band of the PUCCH is less than frequency bands of the first frequency sub-band and the second frequency sub-band, the first network does not receive serious interference from the second network. In this way, an uplink PUSCH channel of the first network may have more consecutive spectrum resources to be allocated to a single user equipment, thereby improving an uplink peak throughput. An uplink peak rate that can be obtained by a user equipment is equivalent to a rate of a sum of frequency bands of the second frequency band and the third frequency band. Meanwhile, because the first carrier group is preferentially used in a case in which a base station of the second network needs to use the second frequency band, and the second carrier group is used only in a case in which resources of the first carrier group are insufficient, a use probability of the second carrier group is less than a use probability of the first carrier group. Therefore, a larger isolation frequency band exists between the second frequency sub-band and the first carrier group with relatively high load, a risk of adjacent channel leakage interference is smaller, resource scheduling performed by the first network on the second frequency band is easier, and all resources of the second frequency bands can be more conveniently allocated to a single user equipment, thereby avoiding excessively high dependence of allocation of the second frequency band on a user equipment.

Optionally, as an example, the controller may be further configured to: according to a frequency plan of the second network, determine a physical cell identity plan of the first network, and determine that only one resource group occupied by a downlink control channel is allocated to the second frequency band, so as to reduce interference of the second network to the downlink control channel of the first network.

Optionally, as an example, the transceiver is further configured to send information about the downlink control channel by using a resource group not in the second frequency band; and
the controller may be further configured to allocate energy of a resource group in the second frequency band to at least one resource group of resource groups not in the second frequency band, so as to increase transmit power of the at least one resource group. In this case, the base station can reduce the interference of the second network to the downlink control channel of the first network.

Optionally, as an example, the controller may be further configured to determine a control channel element CCE aggregation group whose frequency does not collide with that of a carrier of the second network in a same sector; and
the transceiver may be further configured to send data by using the CCE aggregation group whose frequency does not collide with that of the carrier of the second network in the same sector. In this case, the base station can reduce the interference of the second network to the PDCCH of the first network.

Optionally, as an example, the controller may be further configured to determine a subframe with an interference collision less than a preset threshold; and
the transceiver may be further configured to send data by using the subframe with the interference collision less than the preset threshold. In this case, the base station can reduce the interference of the second network to the PDCCH of the first network.

Optionally, as an example, the controller may be further configured to determine a CCE combination with the least interference; and
the transceiver may be further configured to send data by using the CCE combination with the least interference. In this case, the base station can reduce the interference of the second network to the PDCCH of the first network.

Optionally, as an example, the controller may be further configured to: in a case in which a determined CCE resource collides with a carrier of a second network in a neighboring cell, determine that the determined CCE resource is a collision resource; and
the controller may be further configured to allocate power, which is used to send information by using the collision resource, to at least one CCE resource that is not the collision resource. In this case, the base station can reduce the interference of the second network to the PDCCH of the first network.

Optionally, as an example, the controller may be further configured to determine an interference state of a common pilot signal; and
the controller may be further configured to determine, according to the interference state of the common pilot signal, a manner of compensating a channel quality indicator CQI. In this case, the base station can reduce interference of the second network to the common pilot signal of the first network.

Optionally, as an example, the controller may be further configured to determine, according to block error rate BLER information of data transmission of a user equipment, an error direction of a modulation and coding scheme MCS selection; and
the controller may be further configured to determine, according to the error direction of the MCS, the manner of compensating the CQI. In this case, the base station can reduce the interference of the second network to the common pilot signal of the first network.

Optionally, as an example, the controller may be further configured to determine a user type, where the user type is a central user equipment and an edge user equipment of the base station of the first network;
the controller may be further configured to determine scheduling information, where the scheduling information includes a success rate of transmission using the second frequency band and/or an MCS order;
the controller may be further configured to determine a scheduling policy of a first resource group set and a second resource group set according to the scheduling information and the user type, where the first resource group set is all resource groups that belong to the second frequency band, and the second resource group set is all resource groups that belong to the third frequency band; and
the controller may be further configured to schedule the first resource group set and/or the second resource group set according to the scheduling policy. In this case, the base station can reduce interference of the second network to a PDSCH of the first network.

Optionally, as an example, the controller may be further configured to allocate a PRACH frequency resource of the first network to the second frequency band only. In this case, the base station can reduce interference of the second network to a PRACH of the first network.

Optionally, as an example, the controller may be further configured to determine interference of the second network to the first network.

The controller may be specifically configured to determine the interference of the second network to the first network according to a CQI feedback.

The controller may be specifically configured to detect noise of an uplink second frequency band, and determine the interference of the second network to the first network according to the noise.

The controller may be specifically configured to collect statistics on a success rate of data transmission by a user equipment on the second frequency band, and determine the interference of the second network to the first network according to the success rate.

The controller may be specifically configured to determine the number of selections of the modulation and coding scheme by a user equipment on the second frequency band, and determine the interference of the second network to the first network according to the number of selections.

Optionally, as an example, the controller may be further configured to determine whether the second network uses the second frequency band.

The controller may be specifically configured to obtain received signal strength information of an uplink physical frequency sub-band, and determine, according to the received signal strength information, whether the second network uses the second frequency band corresponding to the physical frequency sub-band.

The controller may be specifically configured to determine, according to an MCS of a user equipment of the first network using the second frequency band, with reference to an IBLER scheme of an HARQ, whether the second network uses the second frequency band.

The controller may be specifically configured to obtain CQI information fed back by a user equipment, and determine, according to the CQI information, whether the second network uses the second frequency band.

As an example, a base station of the second network includes a controller and a transceiver, which can perform the steps performed by the foregoing base station of the second network.

The controller is configured to determine a first frequency band, a second frequency band, and a third frequency band, where the second frequency band and the third frequency band form a carrier of the first network, and the second frequency band and the third frequency band are used for communication of the first network.

The transceiver is configured to: in a case in which load of communication using the first frequency band reaches a first preset threshold, perform communication by using the second frequency band.

According to the base station, the first network and the second network can share the second frequency band for communication, therefore improving spectrum utilization efficiency, and reducing a spectrum waste.

Optionally, as an example, the controller may be further configured to use the first frequency band to bear a broadcast control channel BCCH and a traffic channel TCH; and
the controller may be further configured to use the second frequency band to bear a TCH. In this case, the base station can reduce interference to the first network.

Optionally, as an example, the controller may be further configured to: in a case in which a use rate of the TCH of the first frequency band reaches a second preset threshold, use the TCH of the second frequency band. In this case, the base station can reduce the interference to the first network.

Optionally, as an example, the controller may be further configured to: in a case in which multiple carriers exist in the second network, use a TCH of a carrier in the second frequency band; and
the controller may be further configured to: in a case in which the used TCH of the carrier is exhausted, use a TCH of another carrier in the second frequency band. In this case, the base station can reduce the interference to the first network.

Optionally, as an example, the controller may be further configured to: in a case in which it is determined that an idle timeslot exists in the first frequency band, switch a user equipment of the second frequency band to the first frequency band. In this case, the base station can reduce the interference to the first network.

Optionally, as an example, the controller may be further configured to determine an edge user equipment; and
the controller may be further configured to: in a case in which it is determined that both the first frequency band and the second frequency band are used, and no idle resource exists in the first frequency band, switch the edge user equipment using the second frequency band to the first frequency band. In this case, the base station can reduce the interference to the first network.

Optionally, as an example, the controller may be further configured to determine a central user equipment; and
the transceiver may be further configured to send a power control message to the central user equipment, where the power control message is used for instructing the central user equipment to decrease transmit power. In this case, the base station can reduce the interference to the first network.

Optionally, as an example, the controller may be further configured to allocate the second frequency band into a first carrier group and a second carrier group, where the first carrier group includes at least one carrier of the second network, and the second carrier group includes at least one carrier of the second network;
the controller may be further configured to: in a case in which communication is performed by using the second frequency band, perform communication by preferentially using the first carrier group; and
the controller may be further configured to: in a case in which load of communication using the first carrier group reaches a third preset threshold, perform communication by using the second carrier group. In this case, the base station can reduce the interference to the first network.

A person of ordinary skill in the art may be aware that, with reference to the examples described in the embodiments disclosed in this specification, units and algorithm steps may be implemented by electronic hardware, computer software, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on multiple network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the idea of the present invention.

## Claims

1. A spectrum sharing method, wherein the method is implemented by a base station of a first network and comprises:
• determining (101, 301) a first frequency band, a second frequency band, and a third frequency band, wherein the first frequency band and the second frequency band are used for a communication of a second network; and
• performing (102, 302) communication by using the second frequency band and the third frequency band, wherein the second frequency band and the third frequency band form a carrier of the first network,
wherein the method further comprises:
• dividing the second frequency band into a first carrier group (201) and a second carrier group (202), wherein the first carrier group (201) comprises at least one carrier of the second network, and the second carrier group (202) comprises at least one carrier of the second network;
the method **characterized in that** it further comprises:
• dividing the third frequency band into a first frequency sub-band (231) and a second frequency sub-band (232), wherein the first frequency sub-band (231) is adjacent to the first carrier group, the second carrier group is adjacent to the first carrier group, and the second frequency sub-band (232) is adjacent to the second carrier group,
• wherein the first frequency sub-band (231) of the third frequency band is reserved for a Physical Uplink Control Channel, PUCCH, of the first network, the first carrier group (201) of the second frequency band is used in a case a base station of the second network uses the second frequency band and the second carrier group (202) of the second frequency band is only used in a case in which the frequency resources of the first carrier group (201) are insufficient.

2. The method according to claim 1, wherein a ratio of the third frequency band to the second frequency band is greater than 1:1.

3. A base station (600) of a first network, the base station (600) comprising:
• a control unit (601), configured to determine a first frequency band, a second frequency band, and a third frequency band, wherein the first frequency band and the second frequency band are used for a communication of a second network; and
• a communication unit (602), configured to perform communication by using the second frequency band and the third frequency band, wherein the second frequency band and the third frequency band form a carrier of the first network;
• wherein the control unit (601) is further configured to allocate the second frequency band into a first carrier group (201) and a second carrier group (202), wherein the first carrier group (201) comprises at least one carrier of the second network, and the second carrier group (202) comprises at least one carrier of the second network;
the base station **characterized in that**:
• the control unit (601) is further configured to allocate the third frequency band into a first frequency sub-band (231) and a second frequency sub-band (232), wherein the first frequency sub-band (231) is adjacent to the first carrier group, the second carrier group is adjacent to the first carrier group, and the second frequency sub-band (232) is adjacent to the second carrier group (202),
• wherein the first frequency sub-band (231) of the third frequency band is reserved for a Physical Uplink Control Channel, PUCCH, of the first network, the first carrier group (201) of the second frequency band is used in a case a base station of the second network uses the second frequency band and the second carrier group (202) of the second frequency band is only used in a case in which the frequency resources of the first carrier group (201) are insufficient.

## Patentansprüche

1. Verfahren zur gemeinsamen Spektrumsnutzung, wobei das Verfahren durch eine Basisstation eines ersten Netzes implementiert wird und Folgendes umfasst:
- Bestimmen (101, 301) eines ersten Frequenzbandes, eines zweiten Frequenzbandes und eines dritten Frequenzbandes, wobei das erste Frequenzband und das zweite Frequenzband für eine Kommunikation eines zweiten Netzes verwendet werden; und
- Durchführen (102, 302) einer Kommunikation durch Verwenden des zweiten Frequenzbandes und des dritten Frequenzbandes, wobei das zweite Frequenzband und das dritte Frequenzband einen Träger des ersten Netzes bilden,
wobei das Verfahren ferner Folgendes umfasst:
- Unterteilen des zweiten Frequenzbandes in eine erste Trägergruppe (201) und eine zweite Trägergruppe (202), wobei die erste Trägergruppe (201) wenigstens einen Träger des zweiten Netzes umfasst und die zweite Trägergruppe (202) wenigstens einen Träger des zweiten Netzes umfasst;
wobei das Verfahren **dadurch gekennzeichnet ist, dass** es ferner Folgendes umfasst:
- Unterteilen des dritten Frequenzbandes in ein erstes Frequenzsubband (231) und ein zweites Frequenzsubband (232), wobei das erste Frequenzsubband (231) an die erste Trägergruppe angrenzt, die zweite Trägergruppe an die erste Trägergruppe angrenzt und das zweite Frequenzsubband (232) an die zweite Trägergruppe angrenzt,
- wobei das erste Frequenzsubband (231) des dritten Frequenzbandes für einen Physischer-"Uplink"-Steuerkanal, PUCCH (Physical Uplink Control Channel), des ersten Netzes reserviert ist, die erste Trägergruppe (201) des zweiten Frequenzbandes verwendet wird, falls eine Basisstation des zweiten Netzes das zweite Frequenzband verwendet, und die zweite Trägergruppe (202) des zweiten Frequenzbandes nur verwendet wird, falls die Frequenzressourcen der ersten Trägergruppe (201) ungenügend sind.

2. Verfahren nach Anspruch 1, wobei ein Verhältnis des dritten Frequenzbandes zu dem zweiten Frequenzband größer als 1:1 ist.

3. Basisstation (600) eines ersten Netzes, wobei die Basisstation (600) Folgendes umfasst:
- eine Steuereinheit (601), die zum Bestimmen eines ersten Frequenzbandes, eines zweiten Frequenzbandes und eines dritten Frequenzbandes konfiguriert ist, wobei das erste Frequenzband und das zweite Frequenzband für eine Kommunikation eines zweiten Netzes verwendet werden; und
- eine Kommunikationseinheit (602), die zum Durchführen einer Kommunikation durch Verwenden des zweiten Frequenzbandes und des dritten Frequenzbandes konfiguriert ist, wobei das zweite Frequenzband und das dritte Frequenzband einen Träger des ersten Netzes bilden,
- wobei die Steuereinheit (601) ferner zum Aufteilen des zweiten Frequenzbandes in eine erste Trägergruppe (201) und eine zweite Trägergruppe (202) konfiguriert ist, wobei die erste Trägergruppe (201) wenigstens einen Träger des zweiten Netzes umfasst und die zweite Trägergruppe (202) wenigstens einen Träger des zweiten Netzes umfasst;
wobei die Basisstation **dadurch gekennzeichnet ist, dass**:
- die Steuereinheit (601) ferner zum Aufteilen des dritten Frequenzbandes in ein erstes Frequenzsubband (231) und ein zweites Frequenzsubband (232) konfiguriert ist, wobei das erste Frequenzsubband (231) an die erste Trägergruppe angrenzt, die zweite Trägergruppe an die erste Trägergruppe angrenzt und das zweite Frequenzsubband (232) an die zweite Trägergruppe (202) angrenzt,
- wobei das erste Frequenzsubband (231) des dritten Frequenzbandes für einen Physischer-"Uplink"-Steuerkanal, PUCCH, des ersten Netzes reserviert ist, die erste Trägergruppe (201) des zweiten Frequenzbandes verwendet wird, falls eine Basisstation des zweiten Netzes das zweite Frequenzband verwendet, und die zweite Trägergruppe (202) des zweiten Frequenzbandes nur verwendet wird, falls die Frequenzressourcen der ersten Trägergruppe (201) ungenügend sind.

## Revendications

1. Procédé de partage de spectre, le procédé étant mis en œuvre par une station de base d'un premier réseau et comprenant les étapes consistant à :
• déterminer (101, 301) une première bande de fréquences, une deuxième bande de fréquences et une troisième bande de fréquences, la première bande de fréquences et la deuxième bande de fréquences étant utilisées pour une communication d'un deuxième réseau ; et
• effectuer (102, 302) une communication en utilisant la deuxième bande de fréquences et la troisième bande de fréquences, la deuxième bande de fréquences et la troisième bande de fréquences formant une porteuse du premier réseau,
le procédé comprenant également l'étape consistant à :
• diviser la deuxième bande de fréquences en un premier groupe de porteuses (201) et un deuxième groupe de porteuses (202), le premier groupe de porteuses (201) comprenant au moins une porteuse du deuxième réseau, et le deuxième groupe de porteuses (202) comprenant au moins une porteuse du deuxième réseau ;
le procédé étant **caractérisé en ce qu'**il comprend également l'étape consistant à :
• diviser la troisième bande de fréquences en une première sous-bande de fréquences (231) et une deuxième sous-bande de fréquences (232), la première sous-bande de fréquences (231) étant adjacente au premier groupe de porteuses, le deuxième groupe de porteuses étant adjacent au premier groupe de porteuses, et la deuxième sous-bande de fréquences (232) étant adjacente au deuxième groupe de porteuses,
• la première sous-bande de fréquences (231) de la troisième bande de fréquences étant réservée pour un canal de commande de liaison montante physique, PUCCH, du premier réseau, le premier groupe de porteuses (201) de la deuxième bande de fréquences étant utilisé dans le cas où une station de base du deuxième réseau utilise la deuxième bande de fréquences et le deuxième groupe de porteuses (202) de la deuxième bande de fréquences n'étant utilisé que dans le cas où les ressources de fréquence du premier groupe de porteuses (201) sont insuffisantes.

2. Procédé selon la revendication 1, dans lequel un rapport de la troisième bande de fréquences à la deuxième bande de fréquences est supérieur à 1:1.

3. Station de base (600) d'un premier réseau, la station de base (600) comprenant :
• une unité de commande (601), configurée pour déterminer une première bande de fréquences, une deuxième bande de fréquences et une troisième bande de fréquences, la première bande de fréquences et la deuxième bande de fréquences étant utilisées pour une communication d'un deuxième réseau ; et
• une unité de communication (602), configurée pour effectuer une communication en utilisant la deuxième bande de fréquences et la troisième bande de fréquences, la deuxième bande de fréquences et la troisième bande de fréquences formant une porteuse du premier réseau ;
• l'unité de commande (601) étant également configurée pour attribuer la deuxième bande de fréquences sous la forme d'un premier groupe de porteuses (201) et d'un deuxième groupe de porteuses (202), le premier groupe de porteuses (201) comprenant au moins une porteuse du deuxième réseau, et le deuxième groupe de porteuses (202) comprenant au moins une porteuse du deuxième réseau ;
la station de base étant **caractérisée en ce que** :
• l'unité de commande (601) est également configurée pour attribuer la troisième bande de fréquences sous la forme d'une première sous-bande de fréquences (231) et d'une deuxième sous-bande de fréquences (232), la première sous-bande de fréquences (231) étant adjacente au premier groupe de porteuses, le deuxième groupe de porteuses étant adjacent au premier groupe de porteuses, et la deuxième sous-bande de fréquences (232) étant adjacente au deuxième groupe de porteuses (202),
• la première sous-bande de fréquences (231) de la troisième bande de fréquences étant réservée pour un canal de commande de liaison montante physique, PUCCH, du premier réseau, le premier groupe de porteuses (201) de la deuxième bande de fréquences étant utilisé dans le cas où une station de base du deuxième réseau utilise la deuxième bande de fréquences et le deuxième groupe de porteuses (202) de la deuxième bande de fréquences n'étant utilisé que dans le cas où les ressources de fréquence du premier groupe de porteuses (201) sont insuffisantes.
